# EUROPEAN PATENT APPLICATION

(11) **EP 4 572 211 A1**
(43) Date of publication of application: **18.06.2025**
(21) Application number: 23852852.5
(22) Date of filing: 01.08.2023
(51) Int. Cl.: H04L 5/00, H04B 7/0452

(54) **METHOD FOR PROVIDING DM-RS CONFIGURATION INFORMATION IN WIRELESS COMMUNICATION SYSTEM AND DEVICE THEREFOR**

(30) Priority: 09.08.2022 KR 20220099222
(71) Applicant: LG Electronics Inc., Yeongdeungpo-gu Seoul 07336 (KR)
(72) Inventor: KIM, Hyungtae, Seoul 06772 (KR); JEONG, Chanho, Seoul 06772 (KR); KANG, Jiwon, Seoul 06772 (KR)
(74) Representative: Plasseraud IP
(86) International application number: PCT/KR2023/011241
(87) International publication number: WO 2024/034972

(57) **Abstract**

The present disclosure relates to a method performed by a user equipment (UE) in a wireless communication system. Specifically, the method includes the steps of: receiving downlink control information (DCI) for a physical downlink shared channel (PDSCH) from a base station (BS); and receiving the PDSCH from the BS on the basis of port information of a demodulation reference signal (DM-RS) included in the DCI, wherein the port information of the DM-RS identifies at least one of DM-RS ports included in a first DM-RS port group and DM-RS ports included in a second DM-RS port group, and the DM-RS ports included in the second DM-RS port group are determined on the basis of the DM-RS ports included in the first DM-RS port group and at least one offset.

## Description

### TECHNICAL FIELD

The present disclosure relates to a wireless communication system, and more particularly, to a method of providing DM-RS configuration information in a wireless communication system and apparatus therefor.

### BACKGROUND ART

Wireless communication systems are being widely deployed to provide various types of communication services such as voice and data. In general, a wireless communication system is a multiple access system that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

### DISCLOSURE

### TECHNICAL TASKS

Based on the discussion as described above, hereinafter, a method of providing DM-RS configuration information in a wireless communication system and apparatus therefor will be proposed.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTIONS

In one technical aspect of the present disclosure, provided is a method performed by a User Equipment (UE) in a wireless communication system, the method including receiving, from a Base Station (BS), a Downlink Control Information (DCI) for a Physical Downlink Shared Channel (PDSCH) and receiving the PDSCH from the BS based on port information of a Demodulation Reference Signal (DM-RS) included in the DCI, wherein the port information of the DM-RS identifies at least one DM-RS port from DM-RS ports included in a first DM-RS port group and DM-RS ports included in a second DM-RS port group and wherein the DM-RS ports included in the second DM-RS port group are determined based on the DM-RS ports included in the first DM-RS port group and at least one offset.

In another technical aspect of the present disclosure, provided is a User Equipment (UE) in a wireless communication system, the UE including at least one transceiver, at least one processor, and at least one computer memory operably connectable to the at least one processor and storing instructions enabling the at least one processor to perform operations when executed, the operations including receiving, from a Base Station (BS), a Downlink Control Information (DCI) for a Physical Downlink Shared Channel (PDSCH) and receiving the PDSCH from the BS based on port information of a Demodulation Reference Signal (DM-RS) included in the DCI, wherein the port information of the DM-RS identifies at least one DM-RS port from DM-RS ports included in a first DM-RS port group and DM-RS ports included in a second DM-RS port group and wherein the DM-RS ports included in the second DM-RS port group are determined based on the DM-RS ports included in the first DM-RS port group and at least one offset.

In another technical aspect of the present disclosure, provided is an apparatus for processing in a wireless communication system, the apparatus including at least one processor and at least one computer memory operably connectable to the at least one processor and storing instructions enabling the at least one processor to perform operations for a User Equipment (UE) when executed, the operations including receiving, from a Base Station (BS), a Downlink Control Information (DCI) for a Physical Downlink Shared Channel (PDSCH) and receiving the PDSCH from the BS based on port information of a Demodulation Reference Signal (DM-RS) included in the DCI, wherein the port information of the DM-RS identifies at least one DM-RS port from DM-RS ports included in a first DM-RS port group and DM-RS ports included in a second DM-RS port group and wherein the DM-RS ports included in the second DM-RS port group are determined based on the DM-RS ports included in the first DM-RS port group and at least one offset.

In another technical aspect of the present disclosure, provided is a computer-readable storage medium storing at least one program code including instructions enabling at least one processor to perform operations for a User Equipment (UE) when executed, the operations including receiving, from a Base Station (BS), a Downlink Control Information (DCI) for a Physical Downlink Shared Channel (PDSCH) and receiving the PDSCH from the BS based on port information of a Demodulation Reference Signal (DM-RS) included in the DCI, wherein the port information of the DM-RS identifies at least one DM-RS port from DM-RS ports included in a first DM-RS port group and DM-RS ports included in a second DM-RS port group and wherein the DM-RS ports included in the second DM-RS port group are determined based on the DM-RS ports included in the first DM-RS port group and at least one offset.

In another technical aspect of the present disclosure, provided is a method performed by a base station (BS) in a wireless communication system, the method including transmitting, to a User Equipment (UE), a Downlink Control Information (DCI) for a Physical Downlink Shared Channel (PDSCH) and transmitting the PDSCH to the UE based on port information of a Demodulation Reference Signal (DM-RS) included in the DCI, wherein the port information of the DM-RS identifies at least one DM-RS port from DM-RS ports included in a first DM-RS port group and DM-RS ports included in a second DM-RS port group and wherein the DM-RS ports included in the second DM-RS port group are determined based on the DM-RS ports included in the first DM-RS port group and at least one offset.

In further technical aspect of the present disclosure, provided is a Base Station (BS) in a wireless communication system, the BS including at least one transceiver, at least one processor, and at least one computer memory operably connectable to the at least one processor and storing instructions enabling the at least one processor to perform operations when executed, the operations including transmitting, to a User Equipment (UE), a Downlink Control Information (DCI) for a Physical Downlink Shared Channel (PDSCH); and transmitting the PDSCH to the UE based on port information of a Demodulation Reference Signal (DM-RS) included in the DCI, wherein the port information of the DM-RS identifies at least one DM-RS port from DM-RS ports included in a first DM-RS port group and DM-RS ports included in a second DM-RS port group and wherein the DM-RS ports included in the second DM-RS port group are determined based on the DM-RS ports included in the first DM-RS port group and at least one offset.

Preferably, a minimum value of the at least one offset may be zero, based on a type of the DM-RS being a first type, a maximum value of the at least one offset may be 8, and based on the type of the DM-RS being a second type, the maximum value of the at least one offset may be 12.

Preferably, based on the number of the DM-RS ports identified by the port information of the DM-RS being two or more, the port information of the DM-RS may include information on an offset related to each of the two or more DM-RS ports.

Preferably, the DCI may schedule a single codeword through the PDSCH and the number of Front-Loaded (FL) symbols of the DM-RS may be 2.

Preferably, the DCI may include information on the number of DM-RS CDM groups without data, and based on scheduling multiple codewords through the PDSCH by the DCI or the number of Front-Loaded (FL) symbols of the DM-RS being 1, the number of DM-RS CDM groups without the data of the DM-RS may be twice the number of the DM-RS CDM groups without the data included in the DCI.

The above solutions are only some of the examples of the disclosure, and various examples reflecting the technical features of the disclosure may be derived and understood from the following detailed description by those skilled in the art.

### ADVANTAGEOUS EFFECTS

According to the disclosure, wireless signal transmission and reception may be efficiently performed in a wireless communication system.

It will be appreciated by persons skilled in the art that the technical effects that could be achieved with the disclosure are not limited to what has been particularly described hereinabove and the above and other technical effects that the disclosure could achieve will be more clearly understood from the following detailed description.

### DESCRIPTION OF DRAWINGS

The accompanying drawings are provided to help understanding of the embodiment, along with a detailed description. However, the technical features of the embodiment are not limited to a specific drawing, and features disclosed in each drawing may be combined with each other to constitute a new embodiment. Reference numerals in each drawing denote structural elements:
FIG. 1 illustrates physical channels used in a 3rd generation partnership project (3GPP) system, which is an example of wireless communication systems, and a general signal transmission method using the same.
FIG. 2 illustrates a radio frame structure.
FIG. 3 illustrates a resource grid of a slot.
FIG. 4 illustrates exemplary mapping of physical channels in a slot;
FIG. 5 illustrates an exemplary process of transmitting a physical downlink shared channel (PDSCH) and an acknowledgment/negative acknowledgment (ACK/NACK).
FIG. 6 illustrates an exemplary physical uplink shared channel (PUSCH) transmission process.
FIG. 7 illustrates an example of a DM-RS configuration type.
FIG. 8 is a flowchart illustrating a process of receiving a PDSCH according to the present disclosure.
FIG. 9 to FIG. 12 illustrate a communication system (1) and a wireless device applicable to the disclosure.

### BEST MODE

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

While the disclosure is described mainly in the context of 3GPP NR for clarity of description, the technical idea of the disclosure is not limited to 3GPP NR.

In the specification, the expression "setting" may be replaced with the expression "configure/configuration", and the two may be used interchangeably. In addition, conditional expressions (e.g., "if ~~", "in a case ~~", "when ~~", or the like) may be replaced with the expression "based on that ~~" or "in a state/status ~~". Further, an operation of a user equipment (UE)/base station (BS) or an SW/HW configuration according to the satisfaction of the condition may be inferred/understood. Further, when a process of a receiving (or transmitting) side may be inferred/understood from a process of the transmitting (or receiving) side in signal transmission/reception between wireless communication devices (e.g., a BS and a UE), its description may be omitted. For example, signal determination/generation/encoding/transmission on the transmitting side may be understood as signal monitoring reception/decoding/determination on the receiving side. In addition, when it is said that a UE performs (or does not perform) a specific operation, this may also be interpreted as meaning that a BS operates expecting/assuming that the UE performs the specific operation (or expecting/assuming that the UE does not perform the specific operation). In addition, when it is said that a BS performs (or does not perform) a specific operation, this may also be interpreted as meaning that a UE operates expecting/assuming that the BS performs the specific operation (or expecting/assuming that the BS does not perform the specific operation). In addition, the identification and index of each section, embodiment, example, option, method, plan, or the like in the following description are for the convenience of description, and should not be interpreted as meaning that each forms an independent disclosure or that each should be implemented individually. In addition, unless there is an explicitly conflicting/opposing description in describing each section, embodiment, example, option, method, plan, or the like, it may be inferred/interpreted as meaning that at least some of them may be implemented together in combination, or they may be implemented with at least some of them omitted.

In a wireless communication system, a UE receives information through downlink (DL) from a BS and transmit information to the BS through uplink (UL). The information transmitted and received by the BS and the UE includes data and various control information and includes various physical channels according to type/usage of the information transmitted and received by the UE and the BS.

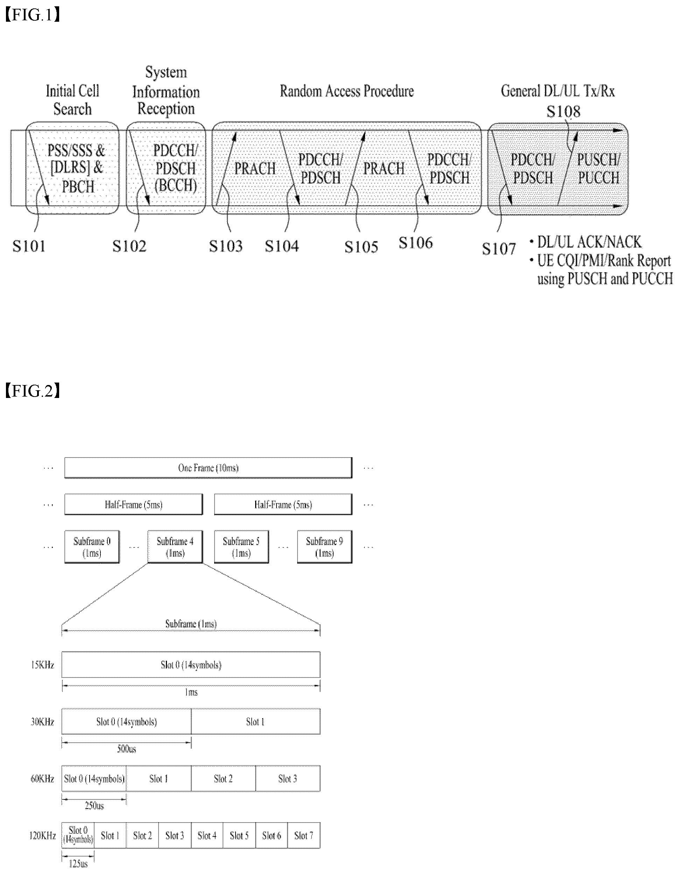

FIG. 1 is a diagram illustrating physical channels and a signal transmission method using the physical channels, in 3GPP NR system.

When powered on or when a UE initially enters a cell, the UE performs initial cell search involving synchronization with a BS in step S101. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

Subsequently, to complete connection to the eNB, the UE may perform a random access procedure with the eNB (S103 to S106). In the random access procedure, the UE may transmit a preamble on a physical random access channel (PRACH) (S103) and may receive a PDCCH and a random access response (RAR) for the preamble on a PDSCH associated with the PDCCH (S104). The UE may transmit a physical uplink shared channel (PUSCH) by using scheduling information in the RAR (S105), and perform a contention resolution procedure including reception of a PDCCH signal and a PDSCH signal corresponding to the PDCCH signal (S106).

After the above procedure, the UE may receive a PDCCH and/or a PDSCH from the eNB (S107) and transmit a Physical Uplink Shared Channel (PUSCH) and/or a Physical Uplink Control Channel (PUCCH) to the eNB (S108), which is a general DL and UL signal transmission procedure. Particularly, the UE receives Downlink Control Information (DCI) on a PDCCH. Control information transmitted from a UE to an eNB is collectively referred to as uplink control information (UCI). The UCI includes a hybrid automatic repeat and request acknowledgement/negative-acknowledgment (HARQ ACK/NACK), a scheduling request (SR), channel state information (CSI), and so on. The CSI includes a channel quality indicator (CQI), a precoding matrix indicator (PMI), a rank indication (RI), and so on. Although the UCI is generally transmitted through a PUCCH, it may be transmitted through a PUSCH, when control information and traffic data should be transmitted simultaneously. In addition, the UCI may be transmitted aperiodically through a PUSCH by a request/indication of the network.

FIG. 2 illustrates the structure of a radio frame. The radio frame may be used for UL transmission and DL transmission in NR. A radio frame is 10 ms in length and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ*, and the number of slots per subframe *N^{subframe,u}ₛₗₒₜ* according to an SCS configuration µ in the NCP case.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 below lists the number of symbols per slot N^{slot}_{symb}, the number of slots per frame *N^{frame,u}ₛₗₒₜ*, and the number of slots per subframe *N^{subframe,u}ₛₗₒₜ* according to an SCS configuration µ in the ECP case.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

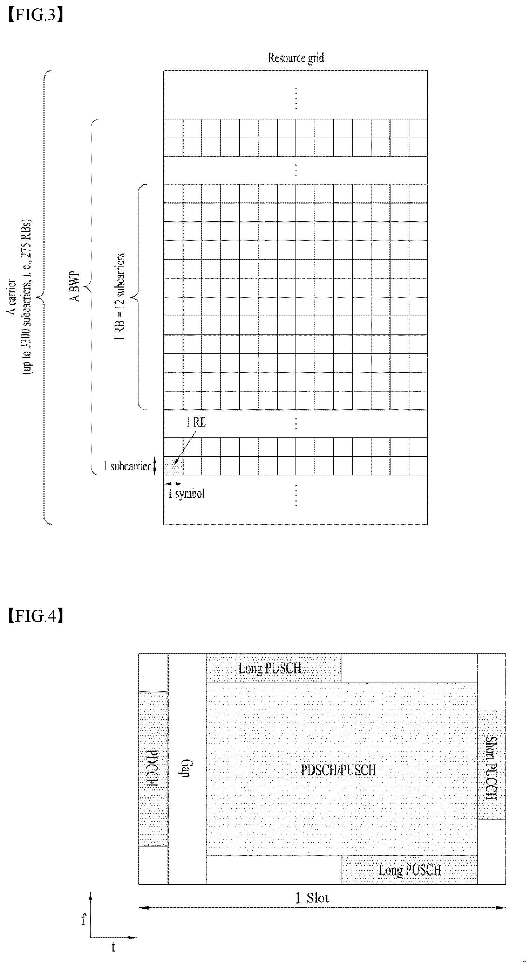

FIG. 3 illustrates an exemplary resource grid for the duration of a slot. A slot inlcudes a plurality of symbols in the time domain. For example, one slot inlcudes 14 symbols in a normal CP case, whereas one slot inlcudes 12 symbols in an extended CP case. A carrier includes a plurality of subcariers in the frequency domain. A resource block (RB) is defined as a plurality of (e.g., 12) contiguous subcarriers in the frequency domain. A bandwidth part (BWP) may be defined as a plurality of physical RBs (PRBs) in the frequency domain, and correspond to one numerology (e.g., an SCS, a CP length, or the like). A carrier may include up to N (e.g., 5) BWPs. Data communication may be performed in an active BWP, and only one BWP may be activated for one UE. Each element of a resource grid may be referred to as a resource element (RE) and mapped to one complex symbol.

FIG. 4 illustrates an example of mapping physical channels in a slot. A PDCCH may be transmitted in a DL control region, and a PDSCH may be transmitted in a DL data region. A PUCCH may be transmitted in a UL control region, and a PUSCH may be transmitted in a UL data region. A GP provides a time gap for switching from a transmisison mode to a reception mode or switching from the reception mode to the transmisison mode at the BS and the UE. Some symbols at a DL-to-UL switching time point within a subcrame may be configured as a GP.

Each physical channel is described below in more detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to an aggregation level (AL). A CCE is a logical allocation unit used to provide a PDCCH with a specific code rate according to a wireless channel state. A CCE includes six resource element groups (REGs). An REG is defined as one OFDM symbol and one (P)RB. The PDCCH is transmitted in a control resource set (CORESET). A CORESET is defined as an REG set having a given numerology (e.g., an SCS, a CP length, and so on). A plurality of CORESETs for one UE may overlap with each other in the time/frequency domain. The CORESET may be configured by system information (e.g., a master information block (MIB)) or UE-specific higher layer (e.g., radio resource control (RRC) layer) signaling. Specifically, the number of RBs and the number (up to 3) of OFDM symbols included in the CORESET may be configured by higher layer signaling.

For PDCCH reception/detection, the UE monitors PDCCH candidates. A PDCCH candidate represents CCE(s) that the UE should monitor for PDCCH detection. Each PDCCH candidate is defined as 1, 2, 4, 8, or 16 CCEs according to an AL. The monitoring includes (blind) decoding of the PDCCH candidates. A set of PDCCH candidates that the UE monitors are defined as a PDCCH search space (SS). The SS includes a common search space (CSS) or a UE-specific search space (USS). The UE may acquire DCI by monitoring PDCCH candidates in one or more SSs configured by an MIB or higher layer signaling. Each CORESET is associated with one or more SSs, and each SS is associated with one COREST. The SS may be defined based on the following parameters.
- controlResourceSetId: Indicates a CORESET associated with the SS
- monitoringSlotPeriodicityAndOffset: Indicates a PDCCH monitoring periodicity (in slots) and a PDCCH monitoring period offset (in slots)
- monitoringSymbolsWithinSlot: Indicates PDCCH monitoring symbols (e.g., the first symbol(s) of the CORESET) within the slot
- nrofCandidates: AL={1, 2, 4, 8, 16} indicates the number of PDCCH candidates (one of 0, 1, 2, 3, 4, 5, 6, and 8)

* An occasion (e.g., time/frequency resources) in which the PDCCH candidates are to be monitored is defined as a PDCCH (monitoring) occasion. One or more PDCCH (monitoring) occasions may be configured within a slot.

Table 3 illustrates characteristics of each SS type.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., dynamic SFI) to the UE, and DCI format 2_1 may be used to deliver DL pre-emption information to the UE. DCI format 2_0 and/or DCI format 2_1 may be transmitted to UEs within a group through a group common PDCCH, which is a PDCCH delivered to UEs defined as a group.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH carries DL data (e.g., a DL-SCH transport block (DL-SCH TB)), and modulation schemes such as quadrature phase shift keying (QPSK), 16 quadrature amplitude modulation (16 QAM), 64 QAM, 256 QAM, or the like is applied to the PDSCH. A TB is encoded to generate a codeword. The PDSCH may carry up to two codewords. Each codeword may be subject to scrambling and modulation mapping, and modulation symbols generated from the codeword may be mapped to one or more layers. Each layer is mapped to resources along with a demodulation reference signal (DMRS)), generated as an OFDM symbol signal, and transmitted through a corresponding antenna port.

The PUCCH carries UCI. The UCI includes the following.
- SR (Scheduling Request): Information used to request UL-SCH resources
- HARQ(Hybrid Automatic Repeat reQuest)-ACK(Acknowledgement): A response to a DL data packet (e.g., codeword) on a PDSCH. This indicates whether the DL data packet has been successfully received. One HARQ-ACK bit may be transmitted in response to a single codeword, and two HARQ-ACK bits may be transmitted in response to two codewords. The HARQ-ACK response includes a positive ACK (simply, ACK), a negative ACK (NACK), DTX, or NACK/DTX. HARQ-ACK is used interchangeably with HARQ ACK/NACK and ACK/NACK.
- CSI (Channel State Information): Feedback information for a DL channel. Multiple input multiple output (MIMO)-related feedback information includes an RI and a PMI.

Table 5 illustrates an example of PUCCH formats. Depending on PUCCH transmission durations, they may be classified into short PUCCH (Formats 0 and 2) and long PUCCH (Formats 1, 3 and 4).

**[Table 5]**

| PUCC H format | Length in OFDM symbols NPUCCHsym b | Number of bits | Usage | Etc |
|---|---|---|---|---|
| 0 | 1-2 | ≤ 2 | HARQ, SR | Sequence selection |
| 1 | 4 - 14 | ≤ 2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 carries UCI of up to 2 bits, and is mapped to and transmitted based on a sequence. Specifically, the UE transmits one of a plurality of sequences through a PUCCH of PUCCH format 0 to transmit specific UCI to the BS. The UE transmits the PUCCH of PUCCH format 0 in PUCCH resources for a corresponding SR configuration, only when transmitting a positive SR.

PUCCH format 1 carries UCI of up to 2 bits, and modulation symbols are spread with an orthogonal cover code (OCC) (which is configured differently depending on whether frequency hopping is performed) in the time domain. A DMRS is transmitted in a symbol which does not carry modulation symbols (i.e., transmitted in time division multiplexing (TDM)).

PUCCH format 2 carries UCI of more than two bits, and modulation symbols are transmitted with a DMRS in frequency division multiplexing (FDM). The DMRS is located in symbol indexes #1, #4, #7 and #10 within a given RB with a density of 1/3. A pseudo noise (PN) sequence is used for a DMRS sequence. Frequency hopping may be activated for 2-symbol PUCCH format 2.

In PUCCH format 3, UEs are not multiplexed within the same PRB, and UCI with more than two bits is delivered. In other words, PUCCH resources of PUCCH format 3 do not include an OCC. A modulation symbol is transmitted with a DMRS in TDM.

PUCCH format 4 supports multiplexing of up to four UEs within the same physical RS and carries UCI with more than two bits. In other words, PUCCH resources of PUCCH format 3 include an OCC. A modulation symbol is transmitted with a DMRS in TDM.

At least one of one or more cells configured for the UE may be configured for PUCCH transmission. At least a primary cell may be configured as a cell for the PUCCH transmission. At least one PUCCH cell group may be configured for the UE based on the at least one cell configured for the PUCCH transmission, and each PUCCH cell group includes one or more cells. A PUCCH cell group may be simply referred to as a PUCCH group. The PUCCH transmission may be configured not only for the primary cell but also for an SCell, and the primary cell belongs to a primary PUCCH group, while the PUCCH-SCell configured for the PUCCH transmission belongs to a secondary PUCCH group. A PUCCH on the primary cell may be used for cells belonging to the primary PUCCH group, and a PUCCH on the PUCCH-SCell may be used for cells belonging to the secondary PUCCH group.

The PUSCH carries UL data (e.g., a UL-SCH TB) and/or UCI, and is transmitted based on a cyclic prefix-orthogonal frequency division multiplexing (CP-OFDM) waveform or a discrete Fourier transform-spread-orthogonal frequency division multiplexing (DFT-s-OFDM) waveform. When the PUSCH is transmitted based on the DFT-s-OFDM waveform, the UE transmits the PUSCH by applying transform precoding. For example, when transform precoding is impossible (e.g., transform precoding is disabled), the UE may transmit the PUSCH based on the CP-OFDM waveform, and when transform precoding is possible (e.g., transform precoding is enabled), the UE may transmit the PUSCH based on the CP-OFDM waveform or the DFT-s-OFDM waveform. PUSCH transmission may be dynamically scheduled by a UL grant in DCI or semi-statically scheduled based on higher layer (e.g. RRC) signaling (and/or layer 1 (L1) signaling (e.g. a PDCCH)). PUSCH transmission may be performed in a codebook-based or non-codebook-based manner.

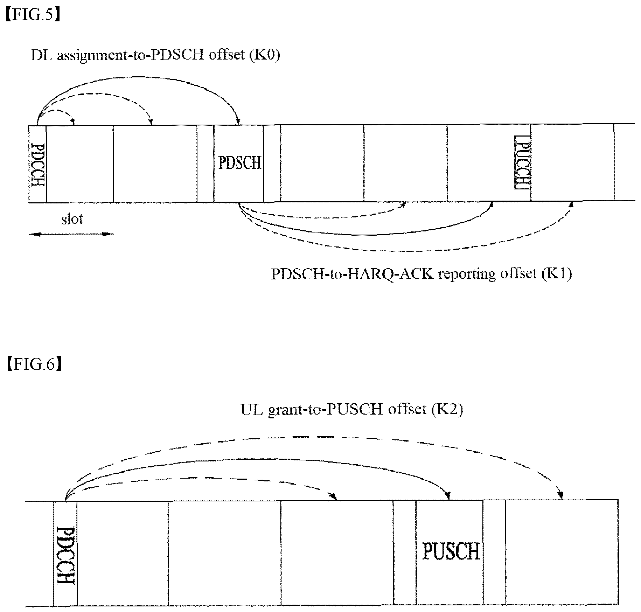

FIG. 5 illustrates an ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.
- Frequency domain resource assignment: Indicates an RB set assigned to a PDSCH.
- Time domain resource assignment: Indicates K0 (e.g., a slot offset), the starting position (e.g., OFDM symbol index) of a PDSCH in slot #n+K0, and the length (e.g., the number of OFDM symbols) of the PDSCH
- PDSCH-to-HARQ_feedback timing indicator: Indicates K1.
- HARQ process number (4 bits): Indicates HARQ process identify (ID) for data (e.g. PDSCH or TB)
- PUCCH resource indicator (PRI): Indicates a PUCCH resource to be used for UCI transmission among a plurality of PUCCH resources in a PUCCH resource set

Subsequently, the UE may receive a PDSCH from slot #(n+K0) according to scheduling information in slot #n. Upon completion of the PDSCH reception in slot #n1 (where n+K0≤ n1), the UE may transmit UCI through a PUCCH in slot #(n1+K1). The UCI may include a HARQ-ACK response to the PDSCH. In FIG. 5, it is assumed for convenience that an SCS for the PDSCH and an SCS for the PUCCH are the same and slot# n1 = slot# n+K0, to which the disclosure is not limited. When the SCSs are different, K1 may be indicated/interpreted based on the SCS of the PUCCH.

When the PDSCH is configured to transmit up to one TB, the HARQ-ACK response may include one bit. When the PDSCH is configured to transmit up to two TBs, the HARQ-ACK response may include two bits in the case of not configuring spatial bundling, and include one bit in the case of configuring spatial bundling. When a HARQ-ACK transmission time for a plurality of PDSCHs is specified as slot #(n+K1), the UCI transmitted in slot #(n+K1) includes HARQ-ACK responses for the plurality of PDSCHs.

Whether the UE should perform spatial bundling for a HARQ-ACK response may be configured (e.g., by RRC/higher layer signaling) for each cell group. For example, spatial bundling may be individually configured for each HARQ-ACK response transmitted through a PUCCH and/or each HARQ-ACK response transmitted through a PUSCH.

When the maximum number of TBs (or codewords) receivable at one time (or schedulable by one DCI) in a corresponding serving cell is 2 (or larger) (e.g., when a higher layer parameter maxNrofCodeWordsScheduledByDCI corresponds to 2 TBs), spatial bundling may be supported. Meanwhile, more than 4 layers may be used for 2-TB transmission, and up to 4 layers may be used for 1-TB transmission. Consequently, when spatial bundling is configured for a corresponding cell group, spatial bundling may be performed for a serving cell for which more than 4 layers are schedulable among the serving cells of the cell group. On the serving cell, the UE that wants to transmit a HARQ-ACK response through spatial bundling may generate the HARQ-ACK response by performing a bitwise logical AND operation on A/N bits for a plurality of TBs.

For example, on the assumption that the UE receives DCI scheduling two TBs and receives the two TBs through a PDSCH based on the DCI, the UE performing spatial bundling may generate a single A/N bit by performing a logical AND operation on a first A/N bit for a first TB and a second A/N bit for a second TB. As a result, when both the first TB and the second TB are ACKs, the UE reports an ACK bit value to the BS, and when any one of the TBs is a NACK, the UE reports a NACK bit value to the BS.

For example, when only one TB is actually scheduled in a serving cell configured to receive two TBs, the UE may generate a single A/N bit by performing a logical AND operation on an A/N bit for the one TB and a bit value of 1. As a result, the UE reports the A/N bit for the one TB to the BS as it is.

There are a plurality of parallel DL HARQ processes for DL transmission in the BS/UE. The plurality of parallel HARQ processes allow DL transmission to be performed continuously while the BS waits for a HARQ feedback to successful or unsuccessful reception of a previous DL transmission. Each HARQ process is associated with a HARQ buffer of a medium access control (MAC) layer. Each DL HARQ process manages state variables such as the number of transmissions of a MAC physical data block (PDU) in a buffer, a HARQ feedback for the MAC PDU in the buffer, and a current redundancy version. Each HARQ process is identified by a HARQ process ID.

FIG. 6 illustrates an exemplary PUSCH transmission process. Referring to FIG. 6, the UE may detect a PDCCH in slot #n. The PDCCH may include UL scheduling information (e.g., DCI format 0_0 or DCI format 0_1). DCI format 0_0 and DCI format 0_1 may include the following information.
- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### QCL (quasi-co location)

When the channel properties of an antenna port may be derived from a channel of another antenna port, the two antenna ports are quasi co-located. The channel properties may include one or more of delay spread, Doppler spread, frequency/Doppler shift, average received power, received timing/average delay, and spatial RX parameter.

The UE may be configured with a list of a plurality of TCI-State configurations through a higher layer parameter, PDSCH-Config. Each TCI-State is associated with a QCL configuration parameter between one or two DL RSs and a DMRS port of a PDSCH. QCL may include qcl-Typel for a first DS RS and qcl-Type2 for a second DL RS. A QCL type may correspond to one of the following types.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.
- Beam measurement: The BS or the UE measures the characteristics of a received beamformed signal.
- Beam determination: The BS or the UE selects its transmission (Tx) beam/reception (Rx) beam.
- Beam sweeping: A spatial domain is covered by using Tx beams and/or Rx beams in a predetermined manner during a predetermined time interval.
- Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

The DL BM process may include (1) transmission of a beamformed DL RS (e.g., a CSI-RS or SSB) from the BS, and (2) beam reporting from the UE.

The beam report may include preferred DL RS ID(s) and reference signal received power (RSRP) corresponding to the DL RS ID(s). A DL RS ID may be an SSB resource indicator (SSBRI) or a CSI-RS resource indicator (CRI).

### MIMO (Multi-Input Multi-Output) Operation Related RS

Hereinafter, DM-RS (demodulation reference signal) among RSs related to MIMO operation will be described.

In NR, DM-RS is characterized in that it is transmitted only when necessary to enhance network energy efficiency and ensure forward compatibility. A time domain density of DM-RS may vary depending on the speed or mobility of a UE. That is, the density for DM-RS in the time domain may increase in order to track a rapid change of a radio channel in NR.

### (1) DM-RS Receiving Procedure

A DM-RS related operation for PDSCH reception is discussed.

When receiving a PDSCH scheduled by DCI format 1_0 or receiving a PDSCH before a random dedicated higher layer configuration among DM-RS-AdditionalPosition, maxLength, and DM-RS-Type parameters, a UE assumes that no PDSCH exists in a random symbol carrying a DM-RS except a PDSCH with an allocation duration of 2 symbols of PDSCH mapping type B, that a single symbol front-loaded DM-RS of configuration type 1 is transmitted on DM-RS port 1000, and that all remaining orthogonal antenna ports are not related to a transmission of PDSCH to another UE. Additionally,
- For a PDSCH with mapping type A, the UE assumes that DM-RS-Additional Position='pos2' and up to 2 additional single-symbol DM-RSs exist in a slot depending on a PDSCH duration indicated in DCI.
- For a PDSCH with an allocation duration of 7 symbols for a normal CP with mapping type B or 6 symbols for an extended CP, when a front-loaded DM-RS symbol is in each of 1st and 2nd symbols of a PDSCH allocation duration, the UE assumes that there is one additional single symbol DM-RS in 5th or 6th symbol. Otherwise, the UE assumes that there is no additional DM-RS symbol. And,
- For a PDSCH with an allocation duration of 4 symbols with mapping type B, the UE assumes that there is no additional DM-RS anymore,
- For a PDSCH having an allocation duration of 2 symbols with mapping type B, the UE assumes that an additional DM-RS does not exist, and the UE assumes that the PDSCH exists within a symbol carrying a DM-RS.

When receiving a PDSCH scheduled by DCI format 1_1 by a PDCCH with CRC scrambled by C-RNTI, MCS-C-RNTI, or CS (configured scheduling)-RNTI,
- The UE may be configured as a higher layer parameter DM-RS-Type, and the configured DM-RS configuration type is used to receive a PDSCH.
- The UE may be configured with the maximum number of front-loaded DM-RS symbols for the PDSCH by a higher layer parameter maxLength given by DM-RS-DownlinkConfig.

In the UE, the number of DM-RS ports may be scheduled by an antenna port index of DCI format 1_1.

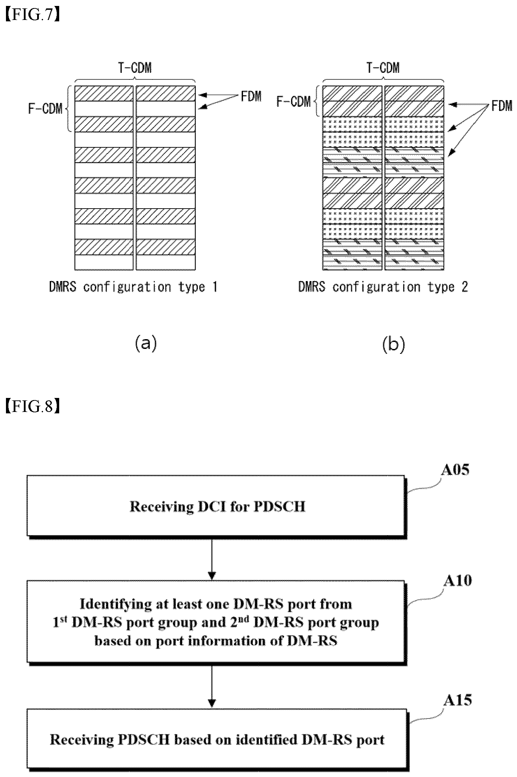

FIG. 7 shows an example of a DM-RS configuration type. In particular, FIG. 7 (a) shows Type 1 DM-RS, and FIG. 7 (b) shows Type 2 DM-RS.

A Type 1 DM-RS has a higher RS density in a frequency domain, and supports up to 4(8) ports for a single(double)-symbol DM-RS. In addition, the Type 1 DM-RS supports length 2 F-CDM and FDM for a single-symbol DM-RS, and supports length 2 F/T-CDM and FDM for a double-symbol DM-RS. A Type 2 DM-RS supports more DM-RS antenna ports and supports up to 6(12) ports for a single(double)-symbol DM-RS.

For the Type 1 DM-RS, if a UE is scheduled with one codeword and antenna port mapping is allocated with indexes of {2, 9, 10, 11, or 30}, or if the UE is scheduled with two codewords, the UE may assume that all of the remaining orthogonal antenna ports are not associated with a transmission of a PDSCH to another UE.

For the Type 2 DM-RS, if the UE is scheduled with one codeword and the antenna port mapping is allocated with indexes of {2,10,23}, or if the UE is scheduled with two codewords, the UE may assume that all of the remaining orthogonal antenna ports are not associated with a transmission of a PDSCH to another UE.

### (2) DM-RS Transmission Procedures

A DM-RS related operation for PUSCH reception will be described. A DM-RS transmission operation is similar to the DM-RS reception related operation examined above, and the names of parameters related to DL may be replaced with the names of parameters related to UL.

### Indication of Demodulation Reference Signal (DM-RS) Configuration

When a UE receives a PDSCH scheduled by DCI, the UE may be configured with a configuration type of a DM-RS by a DM-RS-Type, which is a higher layer parameter, and a DM-RS type is used to receive the PDSCH. In addition, the UE may be configured with a maximum number of Front-Loaded (FL) DM-RS symbols front-inserted for the PDSCH by a higher layer parameter maxLength.

In the case of a Type 1 DM-RS, if a UE is scheduled with a single codeword and a DM-RS antenna port mapped to an index of {2, 9, 10, 11, or 30} is designated, or if the UE is scheduled with two codewords, the UE assumes that all remaining orthogonal DM-RS antenna ports are not associated with a PDSCH transmission to another UE.

Alternatively, in the case of a Type 2 DM-RS, if a UE is scheduled with a single codeword and a DM-RS antenna port mapped to an index of {2, 10, or 23} is designated, or if the UE is scheduled with two codewords, the UE assumes that all remaining orthogonal DM-RS antenna ports are not associated with a PDSCH transmission to another UE.

According to the current 3GPP NR standard, a Type 1 DM-RS has a total of 8 DM-RS antenna ports from DM-RS antenna port 0 to DM-RS antenna port 7 for 2 FL (front loaded) symbol, and a DM-RS antenna port combination consisting of a subset of 8 DM-RS antenna ports (i.e., DM-RS antenna port 0 to DM-RS antenna port 7) may be indicated through a DM-RS antenna port indicator table/field of DCI.

On the other hand, in 3GPP NR standard release 18, a total of 16 DM-RS antenna ports are introduced as DM-RS antenna port 8 to DM-RS antenna port 15 are added in addition to DM-RS antenna port 0 to DM-RS antenna port 7, so if the existing DM-RS antenna port indicator table/field is used as it is, only DM-RS antenna port 0 to DM-RS antenna port 7 can be indicated, thereby causing a problem that the added DM-RS antenna ports 8 to 15 cannot be indicated.

In the present disclosure, if the number of orthogonal DM-RS antenna ports doubles compared to the previous one, a method of indicating the corresponding DM-RS antenna port through DCI is proposed.

Although the proposed scheme described below is described based on a downlink DM-RS antenna port indication, an uplink DM-RS antenna port indication may be indicated in the same manner. However, in the uplink DM-RS antenna port indication, since a DM-RS antenna port indicator table is determined for each rank indicated by an SRS Resource Indicator (SRI) or a Precoding Matrix Index (PMI), it may be configured with only DM-RS antenna port indicator values of the corresponding rank in the downlink DM-RS antenna port indicator table proposed in the present disclosure.

### <Proposal 1>

In Proposal 1 of the present disclosure, a DM-RS antenna port may be indicated by adding an offset f to a per-value DM-RS antenna port combination defined in the existing DM-RS antenna port indicator table. Although Proposal 1 described below is described based on the Type 1 DM-RS, a proposed method may be applied irrespective s of a DM-RS type.

The value of 'f' may be set differently by a base station for each UE and may be indicated through RRC/MAC CE/DCI. In addition, in the case of a Type 1 DM-RS, the value of 'f' may be indicated as at least one value in the range of 0 to 8, and in the case of a Type 2 DM-RS, the value of 'f' may be indicated as at least one value in the range of 0 to 12.

The existing DM-RS indicator table is described by taking an example.

Table 6 exemplarily shows the existing DM-RS indicator table when the maximum number of Front-Loaded (FL) DM-RS symbols is 2.

**[Table 6]**

| **One Codeword: Codeword 0 enabled, Codeword 1 disabled** | | | | **Two Codewords: Codeword 0 enabled, Codeword 1 enabled** | | | |
|---|---|---|---|---|---|---|---|
| **Value** | **Number of DMRS CDM group(s) without data** | **DMRS port(s)** | **Number of front-load symbols** | **Value** | **Number of DMRS CDM group(s) without data** | **DMRS port(s)** | **Number of front-load symbols** |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4-31 | reserved | reserved | reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | Reserved | Reserved | Reserved | | | | |

When a value of 20 (i.e., rank of 2, DM-RS antenna port 0, and DM-RS antenna port 1) is indicated through the existing DM-RS indicator table of Table 6, a UE interprets that DM-RS antenna port 0+f and DM-RS antenna port 1+f are indicated. When an offset is set to 0 for UE1, the UE1 uses the existing DM-RS indicator table as it is, and DM-RS antenna port indication is made as a subset of DM-RS antenna port 0 to DM-RS antenna port 7. In other words, when a value of 20 is indicated, the UE1 interprets that the rank is 2 as it is and that the DM-RS antenna port 0 and the DM-RS antenna port 1 are indicated.

On the other hand, by setting an offset to 8 for UE 1, a DM-RS antenna port indication is made as a subset of DM-RS antenna port 8 to DM-RS antenna port 15. For example, if a value of 20 is indicated, the UE2 adds 8 to each DM-RS antenna port and interprets that the rank is 2 and that the DM-RS antenna port 8 and the DM-RS antenna port 9 are indicated.

Through this, the UEs having received the indication of the offset set to 0 are MU (multi-user)-MIMO scheduled using the DM-RS antenna ports 0 to 7, and the UEs having received the indication of the offset set to 8 are MU-MIMO scheduled using the DM-RS antenna ports 8 to 15. In addition, the UEs having received the indication of the offset set to 0 and the UEs having received the indication of the offset set to may be MU-MIMO scheduled together. In this case, MU-MIMO scheduling is performed using the DM-RS antenna port 0 to the DM-RS antenna port 15.

The DM-RS indicator value to which the offset is applied in the above-proposed scheme may be applied only when it is 2 FL symbol and/or when only codeword 0 is enabled. In the case of 1 FL symbol, there are only four orthogonal DM-RS antenna ports, and even if the number of DM-RS antenna ports is doubled by introducing a new DM-RS pattern in 3GPP NR standard release 18, there are eight identical to the number of the existing 2 FL symbol DM-RS antenna ports, so it can be considered that there is no reason or benefit to introduce the new DM-RS pattern, and therefore, the application of offset is unnecessary. When both codeword 0 and codeword 1 are enabled, it is a high rank case from the perspective of each UE (i.e., the Single User (SU) perspective), and since MU MIMO is mainly used when the rank of each UE is small, the reason and benefit to use the new DM-RS pattern is small.

As a common offset is applied irrespective s of the value of the DM-RS indicator table in Proposal 1, a UE configured with Type 1 DM-RS offset 0 has an indication performed within DM-RS antenna port 0 to DM-RS antenna port 7, and a UE configured with Type 1 DM-RS offset 8 has an indication performed within DM-RS antenna port 8 to DM-RS antenna port 15. That is, from the perspective of one UE, some of DM-RS antenna port 0 to DM-RS antenna port 7 and some of DM-RS antenna port 8 to DM-RS antenna port 15 cannot be indicated together. For example, in case of rank 4, DM-RS antenna port 0, DM-RS antenna port 1, DM-RS antenna port 10, and DM-RS antenna port 11 cannot be indicated.

For mitigation of such a problem and more flexible DM-RS antenna port indication, an offset may be applied differently for each port or each port set. For example, in rank 4 or higher, first two DM-RS antenna ports may be increased by an offset f1, and the remaining two DM-RS antenna ports may be increased by an offset f2. Further, in rank 4 or lower, DM-RS antenna port indication may be performed by increasing the indicated DM-RS antenna port by an offset f.

For more flexible application, offsets may be set by increasing the first and second DM-RS antenna ports among the indicated DM-RS antenna ports by f1, increasing the third and fourth DM-RS antenna ports by f2, and increasing the fifth and sixth DM-RS antenna ports by f3.

### <Proposal 2>

Proposal 1 of the present disclosure may be used to increase the length of TD (Time Domain)-OCC (Orthogonal Cover Code), the length of Frequency Domain (FD)-OCC, or the number of DM-RS antenna ports by TDM, but it is not valid in FDM (i.e., a scheme of increasing the number of DM-RS antenna ports by increasing the number of DM-RS CDM groups). This is because Number of DM-RS CDM group(s) without data is indicated in the DM-RS indicator table, and the increased number of DM-RS CDM groups is not reflected in the DM-RS indicator table.

Thus, Proposal 2 of the present disclosure proposes to double the number of DM-RS CDM groups without data in the DM-RS indicator table for interpretation. That is, if the numbers of DM-RS CDM groups without data are 1, 2, and 3, they are interpreted as 2, 4, and 6, respectively.

There are only three existing Type 2 DM-RS CDM groups consisting of DM-RS CDM groups 0 to DM-RS CDM groups 2, but if a new DM-RS pattern is created through FDM, there may be a total of six DM-RS CDM groups of DM-RS CDM groups 0 to DM-RS CDM groups 5.

The existing DM-RS indicator table is described by taking an example.

Table 7 shows an example of the existing DM-RS indicator table when the maximum number of FL (front-loaded) DM-RS symbols is 2.

**[Table 7]**

| **One codeword: Codeword 0 enabled. Codeward 1 disabled** | | | | **Two Codewords: Codeword 0 enabled, Codeword 1 enabled** | | | |
|---|---|---|---|---|---|---|---|
| **Value** | **Number of DMR S CDM group(s) without data** | **DMRS port(s)** | **Number of front-load symbols** | **Value** | **Number of DMRS CDM group(s) without data** | **DMRS part(s)** | **Number of front-load symbols** |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | D.9:2.3,8.7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 | | | | |
| 8 | 2 | 2,3 | 1 | | | | |
| 9 | 2 | 0-2 | 1 | | | | |
| 10 | 2 | G-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0,1 | 1 | | | | |
| 18 | 3 | 2,3 | 1 | | | | |
| 19 | 3 | 4,5 | 1 | | | | |
| 20 | 3 | G-2 | 1 | | | | |
| 21 | 3 | 3-5 | 1 | | | | |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58-63 | Reserved | Reserved | Reserved | | | | |

For example, only if it is a single codeword case and the number of FL symbols is 2 in Table 7 above, Proposal 1 is applied. If the numbers of DM-RS CDM groups without data are 1 to 3, the numbers of DM-RS CDM groups are interpreted as 2, 4 and 6, respectively.

Specifically, DM-RS CDM group 0 and DM-RS CDM group 1 are considered indicated if the number of DM-RS CDM groups is interpreted as 2, DM-RS CDM group 0 to DM-RS CDM group 3 are considered indicated if the number of DM-RS CDM groups is interpreted as 4, and DM-RS CDM group 0 to DM-RS CDM group 5 are considered indicated if the number of DM-RS CDM groups is interpreted as 6.

In this case, DM-RS antenna port 0, DM-RS antenna port 1, DM-RS antenna port 6, and DM-RS antenna port 7 are set in DM-RS CDM group 0, and DM-RS antenna port 12, DM-RS antenna port 13, DM-RS antenna port 18, and DM-RS antenna port 19, which are generated from adding 12 as offset thereto, are set in DM-RS CDM group 1.

Additionally, DM-RS antenna port 2, DM-RS antenna port 3, DM-RS antenna port 8, and DM-RS antenna port 9 are set in DM-RS CDM group 2, and DM-RS antenna port 14, DM-RS antenna port 15, DM-RS antenna port 20, and DM-RS antenna port 21, which are generated from adding 12 as offset thereto, are set in DM-RS CDM group 3.

Similarly, DM-RS antenna port 4, DM-RS antenna port 5, DM-RS antenna port 10, and DM-RS antenna port 11 are set in DM-RS CDM group 4, and DM-RS antenna port 16, DM-RS antenna port 17, DM-RS antenna port 22, and DM-RS antenna port 23, which are generated from adding 12 as offset thereto, are set in DM-RS CDM group 5.

Additionally, for backward compatibility with a legacy UE, an RE union of DM-RS CDM Group 0 and DM-RS CDM Group 1 has the same RE position as the existing DM-RS CDM Group 0, an RE union of DM-RS CDM Group 2 and DM-RS CDM Group 3 has the same RE position as the existing DM-RS CDM Group 1, and an RE union of DM-RS CDM Group 4 and DM-RS CDM Group 5 should have the same RE position as the existing DM-RS CDM Group 2.

### Proposal 2 applies in Type 1 DM-RS as follows.

If the number of DM-RS CDM groups without data is 1 or 2, the number of DM-RS CDM groups without data should be interpreted as 2 or 4, respectively.

For example, in Table 6 above, Proposal 1 is applied only if it is a single codeword case and the number of FL symbols is 2. Additionally, if the number of DM-RS CDM groups without data is 1 or 2, the number of DM-RS CDM groups without data is interpreted as 2 or 4, respectively.

DM-RS CDM group 0 and DM-RS CDM group 1 are considered indicated if the number of DM-RS CDM groups without data is interpreted as 2, and DM-RS CDM group 0 to DM-RS CDM group 3 is considered indicated if the number of DM-RS CDM groups without data is interpreted as 4.

DM-RS antenna port 0, DM-RS antenna port 1, DM-RS antenna port 4, and DM-RS antenna port 5 are set in DM-RS CDM group 0, and DM-RS antenna port 8, DM-RS antenna port 9, DM-RS antenna port 12, and DM-RS antenna port 13, which are generated from adding 8 as offset thereto, are set in DM-RS CDM group 1.

Additionally, DM-RS antenna port 2, DM-RS antenna port 3, DM-RS antenna port 6, and DM-RS antenna port 7 are set in DM-RS CDM group 2, and DM-RS antenna port 10, DM-RS antenna port 11, DM-RS antenna port 14, and DM-RS antenna port 15, which are generated from adding 8 as offset thereto, are set in DM-RS CDM group 3.

Additionally, for backward compatibility with a legacy UE, an RE union of DM-RS CDM Group 0 and DM-RS CDM Group 1 should have the same RE position as the existing DM-RS CDM Group 0, and an RE union of DM-RS CDM Group 2 and DM-RS CDM Group 3 should have the same RE position as the existing DM-RS CDM Group 1.

The DM-RS antenna port indication method may be finally applied through the union/combination of the proposals mentioned in the present disclosure.

FIG. 8 is a flowchart illustrating a process of receiving a PDSCH according to the present disclosure.

Referring to FIG. 8, in a step A05, a UE receives a Downlink Control Information (DCI) for a PDSCH from a BS. Here, the DCI may include port information of a DM-RS (Demodulation Reference Signal) and information on the number of DM-RS CDM groups without data.

Next, in a step A10, the UE identifies at least one DM-RS port among DM-RS ports included in a first DM-RS port group and DM-RS ports included in ae second DM-RS port group by using the port information of the DM-RS included in the DCI. Specifically, the DM-RS ports included in the second DM-RS port group are determined based on the DM-RS ports included in the first DM-RS port group and at least one offset.

Preferably, the DCI schedules a single codeword through the PDSCH and is limited to a case that the number of Front-Loaded (FL) symbols of the DM-RS is 2, and thus the DM-RS ports included in the second DM-RS port group may be determined based on the one offset.

More preferably, the minimum value of the at least one offset is 0, and the maximum value of the at least one offset is determined based on a type of the DM-RS. Specifically, when the type of the DM-RS is a first type, the maximum value of the at least one offset may be 8, and when the type of the DM-RS is a second type, the maximum value of the at least one offset may be 12. In addition, when the number of DM-RS ports identified by the port information of the DM-RS is two or more, the port information of the DM-RS may include information on an offset corresponding to each of the two or more DM-RS ports.

Finally, in a step A15, the UE receives the PDSCH from the BS based on the identified DM-RS port.

For reference, when the DCI schedules multiple codewords through the PDSCH or the number of Front-Loaded (FL) symbols of the DM-RS is 1, it is preferable to interpret the number of DM-RS CDM groups without data of the DM-RS as twice the number of DM-RS CDM groups without data included in the DCI.

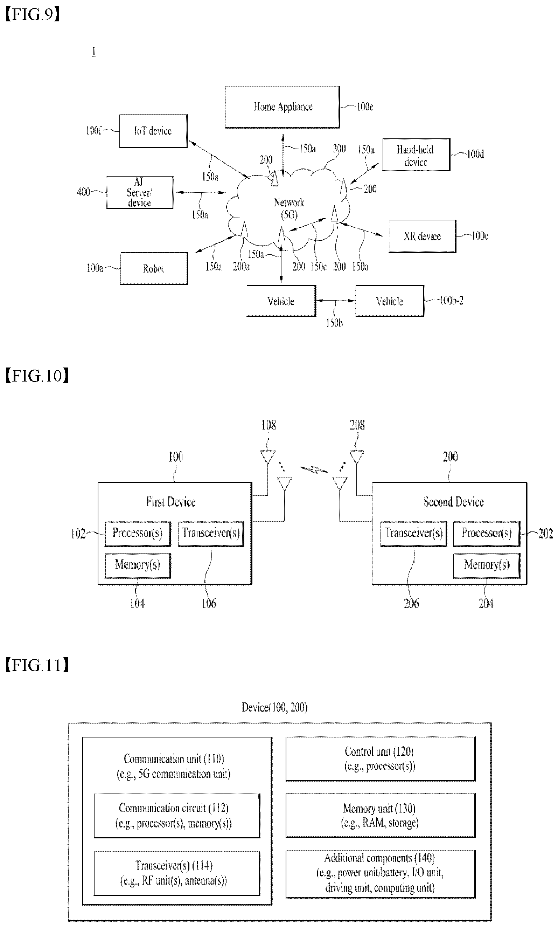

FIG. 9 illustrates an exemplary communication system to which the embodiment is applied.

Referring to FIG. 9, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

FIG. 10 illustrates exemplary wireless devices to which the embodiment is applicable.

Referring to FIG. 10, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 9.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 11 illustrates other exemplary wireless devices to which the embodiment is applied. The wireless devices may be implemented in various forms according to a use case/service (see FIG. 9)

Referring to FIG. 11, wireless devices 100 and 200 may correspond to the wireless devices 100 and 200 of FIG. 10 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 10. For example, the transceiver(s) 114 may include the one or more transceivers 106 and 206 and/or the one or more antennas 108 and 208 of FIG. 10. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 9), the vehicles (100b-1 and 100b-2 of FIG. 9), the XR device (100c of FIG. 9), the hand-held device (100d of FIG. 9), the home appliance (100e of FIG. 9), the IoT device (100f of FIG. 9), a digital broadcast terminal, a hologram device, a public safety device, an MTC device, a medicine device, a fintech device (or a finance device), a security device, a climate/environment device, the AI server/device (400 of FIG. 9), the BSs (200 of FIG. 9), a network node, etc. The wireless device may be used in a mobile or fixed place according to a use-example/service.

In FIG. 11, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

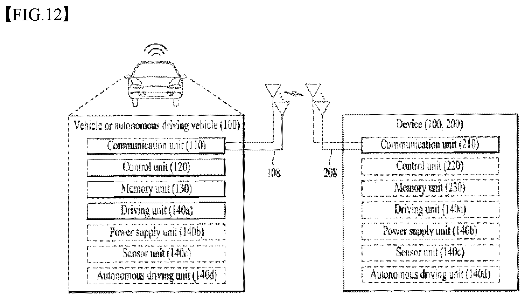

FIG. 12 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 11 illustrates other exemplary wireless devices to which the embodiment is applied. The wireless devices may be implemented in various forms according to a use case/service. (see FIG. 9)

Referring to FIG. 11, wireless devices 100 and 200 may correspond to the wireless devices 100 and 200 of FIG. 10 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 10. For example, the transceiver(s) 114 may include the one or more transceivers 106 and 206 and/or the one or more antennas 108 and 208 of FIG. 10. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 9), the vehicles (100b-1 and 100b-2 of FIG. 9), the XR device (100c of FIG. 9), the hand-held device (100d of FIG. 9), the home appliance (100e of FIG. 9), the IoT device (100f of FIG. 9), a digital broadcast terminal, a hologram device, a public safety device, an MTC device, a medicine device, a fintech device (or a finance device), a security device, a climate/environment device, the AI server/device (400 of FIG. 9), the BSs (200 of FIG. 9), a network node, etc. The wireless device may be used in a mobile or fixed place according to a use-example/service.

In FIG. 11, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 12 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 12, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 11, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Those skilled in the art will appreciate that the embodiment may be carried out in other specific ways than those set forth herein without departing from the spirit and essential characteristics of the embodiment. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

It will be apparent to those skilled in the art that the disclosure may be embodied in other specific forms without departing from the scope of the present disclosure. Accordingly, the above detailed description should not be construed as limiting in all respects but should be considered as illustrative. The scope of the disclosure should be determined by a reasonable interpretation of the appended claims, and all changes within the equivalent scope of the present disclosure are intended to be included in the scope of the disclosure.

### INDUSTRIAL APPLICABILITY

The disclosure is applicable to UEs, BSs, or other apparatuses in a wireless mobile communication system.

## Claims

1. A method performed by a User Equipment (UE) in a wireless communication system, the method comprising:
receiving, from a Base Station (BS), a Downlink Control Information (DCI) for a Physical Downlink Shared Channel (PDSCH); and
receiving the PDSCH from the BS based on port information of a Demodulation Reference Signal (DM-RS) included in the DCI,
wherein the port information of the DM-RS identifies at least one DM-RS port from DM-RS ports included in a first DM-RS port group and DM-RS ports included in a second DM-RS port group and
wherein the DM-RS ports included in the second DM-RS port group are determined based on the DM-RS ports included in the first DM-RS port group and at least one offset.

2. The method of claim 1, wherein a minimum value of the at least one offset is zero, wherein based on a type of the DM-RS being a first type, a maximum value of the at least one offset is 8, and wherein based on the type of the DM-RS being a second type, the maximum value of the at least one offset is 12.

3. The method of claim 1, wherein based on the number of the DM-RS ports identified by the port information of the DM-RS being two or more, the port information of the DM-RS comprises information on an offset related to each of the two or more DM-RS ports.

4. The method of claim 1, wherein the DCI schedules a single codeword through the PDSCH and wherein the number of Front-Loaded (FL) symbols of the DM-RS is 2.

5. The method of claim 1, wherein the DCI includes information on the number of DM-RS CDM groups without data and wherein based on scheduling multiple codewords through the PDSCH by the DCI or the number of Front-Loaded (FL) symbols of the DM-RS being 1, the number of DM-RS CDM groups without the data of the DM-RS is twice the number of the DM-RS CDM groups without the data included in the DCI.

6. A User Equipment (UE) in a wireless communication system, the UE comprising:
at least one transceiver;
at least one processor; and
at least one computer memory operably connectable to the at least one processor and storing instructions enabling the at least one processor to perform operations when executed, the operations comprising:
receiving, from a Base Station (BS), a Downlink Control Information (DCI) for a Physical Downlink Shared Channel (PDSCH); and
receiving the PDSCH from the BS based on port information of a Demodulation Reference Signal (DM-RS) included in the DCI,
wherein the port information of the DM-RS identifies at least one DM-RS port from DM-RS ports included in a first DM-RS port group and DM-RS ports included in a second DM-RS port group and
wherein the DM-RS ports included in the second DM-RS port group are determined based on the DM-RS ports included in the first DM-RS port group and at least one offset.

7. The UE of claim 1, wherein a minimum value of the at least one offset is zero, wherein based on a type of the DM-RS being a first type, a maximum value of the at least one offset is 8, and wherein based on the type of the DM-RS being a second type, the maximum value of the at least one offset is 12.

8. The UE of claim 1, wherein based on the number of the DM-RS ports identified by the port information of the DM-RS being two or more, the port information of the DM-RS comprises information on an offset related to each of the two or more DM-RS ports.

9. The UE of claim 1, wherein the DCI schedules a single codeword through the PDSCH and wherein the number of Front-Loaded (FL) symbols of the DM-RS is 2.

10. The UE of claim 1, wherein the DCI includes information on the number of DM-RS CDM groups without data and wherein based on scheduling multiple codewords through the PDSCH by the DCI or the number of Front-Loaded (FL) symbols of the DM-RS being 1, the number of DM-RS CDM groups without the data of the DM-RS is twice the number of the DM-RS CDM groups without the data included in the DCI.

11. An apparatus for processing in a wireless communication system, the apparatus comprising:
at least one processor; and
at least one computer memory operably connectable to the at least one processor and storing instructions enabling the at least one processor to perform operations for a User Equipment (UE) when executed, the operations comprising:
receiving, from a Base Station (BS), a Downlink Control Information (DCI) for a Physical Downlink Shared Channel (PDSCH); and
receiving the PDSCH from the BS based on port information of a Demodulation Reference Signal (DM-RS) included in the DCI,
wherein the port information of the DM-RS identifies at least one DM-RS port from DM-RS ports included in a first DM-RS port group and DM-RS ports included in a second DM-RS port group and
wherein the DM-RS ports included in the second DM-RS port group are determined based on the DM-RS ports included in the first DM-RS port group and at least one offset.

12. A computer-readable storage medium storing at least one program code including instructions enabling at least one processor to perform operations for a User Equipment (UE) when executed, the operations comprising:
receiving, from a Base Station (BS), a Downlink Control Information (DCI) for a Physical Downlink Shared Channel (PDSCH); and
receiving the PDSCH from the BS based on port information of a Demodulation Reference Signal (DM-RS) included in the DCI,
wherein the port information of the DM-RS identifies at least one DM-RS port from DM-RS ports included in a first DM-RS port group and DM-RS ports included in a second DM-RS port group and
wherein the DM-RS ports included in the second DM-RS port group are determined based on the DM-RS ports included in the first DM-RS port group and at least one offset.

13. A method performed by a base station (BS) in a wireless communication system, the method comprising:
transmitting, to a User Equipment (UE), a Downlink Control Information (DCI) for a Physical Downlink Shared Channel (PDSCH); and
transmitting the PDSCH to the UE based on port information of a Demodulation Reference Signal (DM-RS) included in the DCI,
wherein the port information of the DM-RS identifies at least one DM-RS port from DM-RS ports included in a first DM-RS port group and DM-RS ports included in a second DM-RS port group and
wherein the DM-RS ports included in the second DM-RS port group are determined based on the DM-RS ports included in the first DM-RS port group and at least one offset.

14. The method of claim 13, wherein a minimum value of the at least one offset is zero, wherein based on a type of the DM-RS being a first type, a maximum value of the at least one offset is 8, and wherein based on the type of the DM-RS being a second type, the maximum value of the at least one offset is 12.

15. The method of claim 13, wherein based on the number of the DM-RS ports identified by the port information of the DM-RS being two or more, the port information of the DM-RS comprises information on an offset related to each of the two or more DM-RS ports.

16. The method of claim 13, wherein the DCI schedules a single codeword through the PDSCH and wherein the number of Front-Loaded (FL) symbols of the DM-RS is 2.

17. The method of claim 13, wherein the DCI includes information on the number of DM-RS CDM groups without data and wherein based on scheduling multiple codewords through the PDSCH by the DCI or the number of Front-Loaded (FL) symbols of the DM-RS being 1, the number of DM-RS CDM groups without the data of the DM-RS is twice the number of the DM-RS CDM groups without the data included in the DCI.

18. A Base Station (BS) in a wireless communication system, the BS comprising:
at least one transceiver;
at least one processor; and
at least one computer memory operably connectable to the at least one processor and storing instructions enabling the at least one processor to perform operations when executed, the operations comprising:
transmitting, to a User Equipment (UE), a Downlink Control Information (DCI) for a Physical Downlink Shared Channel (PDSCH); and
transmitting the PDSCH to the UE based on port information of a Demodulation Reference Signal (DM-RS) included in the DCI,
wherein the port information of the DM-RS identifies at least one DM-RS port from DM-RS ports included in a first DM-RS port group and DM-RS ports included in a second DM-RS port group and
wherein the DM-RS ports included in the second DM-RS port group are determined based on the DM-RS ports included in the first DM-RS port group and at least one offset.
